Europäisches Patentamt

European Patent Office

Office européen des brevets

(19)

(11) Veröffentlichungsnummer: **0 025 137**

**A1**

(12) # EUROPÄISCHE PATENTANMELDUNG

(21) Anmeldenummer: **80104829.9**

(22) Anmeldetag: **14.08.80**

(51) Int. Cl.³: **B 01 J 3/02**
//C08F2/00, C08F10/00

(30) Priorität: **29.08.79 DE 2934817**

(43) Veröffentlichungstag der Anmeldung:
**18.03.81 Patentblatt 81/11**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Gruber, Wolfgang, Dr.**
**Lorscher Ring 2B**
**D-6710 Frankenthal(DE)**

(72) Erfinder: **Kuehn, Heinz**
**Heinrich-Bart-Strasse 6**
**D-6702 Bad Duerkheim 1(DE)**

(72) Erfinder: **Ehlers, Ehler**
**Ulmenstrasse 13**
**D-6704 Mutterstadt(DE)**

(54) **Dosiervorrichtung zum regelbaren Einbringen von Feststoffen in Druckräume.**

(57) Die Erfindung betrifft eine Dosiervorrichtung zum Einbringen von rieselfähigen Festoffen, insbesonders von Katalysatoren in Druckräume, bestehend aus in einem Gehäuse rotierenden kegelstumpfförmigen Körper (6), in dessen Mantelfläche sphärisch gerundete Vertiefungen (Kavaturen) (7) von vorbestimmten Volumen zur Aufnahme entsprechender Mengen des Feststoffs eingearbeitet sind, wobei diese Vertiefungen endweder mit schrittweise oder mit stetiger Bewegung des Körpers nach einander an einem zu Führungskanal (4) des Gehäuses, an einem Ausschleusskanal (5) in den Druckraum (3) hin und an einer Entspannungsöffnung (8) vorbeiführbar sind.

EP 0 025 137 A1

BASF Aktiengesellschaft                    O. Z.0050/034015

Dosiervorrichtung zum regelbaren Einbringen von Feststoffen in Druckräume

Die Erfindung betrifft eine Dosiervorrichtung zum regelbaren Einbringen von rieselfähigen bis pulverförmigen Feststoffen, insbesondere von Katalysatoren, in Druckräume, z.B. in Druckreaktoren, entsprechend dem Oberbegriff des Anspruchs 1.

Es sind aus DE-PS 1 175 653 und DE-AS 20 62 513 Dosiervorrichtungen für pulverförmige Stoffe bekannt, mit denen gemessene Stoffmengen, insbesondere Katalysatoren, in unter Drucken zwischen etwa 5 bis 50 bar gehaltene Reaktionsräume mit Hilfe von Kolbenschiebern eingebracht werden können. Die Mengenbemessung erfolgt hierbei entweder durch in die Kolbenschieber senkrecht zu ihrer Hauptachse eingebrachte zylindrische Bohrungen oder durch Einführen des zu dosierenden Stoffes vor die Kolbenstirnfläche bei bemessenem Kolbenschieberhub während des Ausschiebens in den Druckraum.

Dosiervorrichtungen der bekannten Kolbenschieberbauweise bestehen aus mehreren relativ zueinander bewegten Einzelteilen und einer Vielzahl von Dichtungsringen bzw. -manschetten dafür. Für die mit pneumatisch hin- und hergesteuerten Kolbenschiebern ausgeführte Dosiervorrichtung nach DE-AS 20 62 513 sind zusätzlich fünf bis sechs in

F/BL

bestimmter Reihenfolge zu steuernde Ventile erforderlich. Daraus ergibt sich zwangsläufig ein entsprechend hoher Wartungsaufwand und für den Einsatz in Verbindung mit kontinuierlich betriebenen Reaktoren eine erhöhte Unsicherheit hinsichtlich möglicher Störfälle.

Die Erfindung behebt diese Mängel mit einer grundsätzlich geänderten Konstruktion, bei der statt hin- und hergehender Kolbenschieberbewegungen von einem in einem Gehäuse in stets gleichem Drehsinn bewegtem Rotationskörper ausgegangen wird, der innerhalb seiner begrenzenden Kontur ein oder mehrere bemessene Kammern bzw. Kavaturen zur zeitweiligen Aufnahme von Teilmengen des zu dosierenden Stoffes aufweist.

Im einzelnen zeichnet sich die Erfindung dadurch aus, daß der in einem druckdichten Gehäuse drehbare Körper ein Kegelstumpf mit einer Steigung von 1 bis 10 % ist, in dessen Mantelfläche ein oder mehrere, sphärisch gerundete, auf gleicher Umfangslinie liegende Vertiefungen eingearbeitet sind, die bei jeder vollständigen Drehung nacheinander am Zuführungskanal des Gehäuses für den zu dosierenden Stoff, - am Ausschleuskanal in den Druckraum bzw. Reaktor und vor Beendigung der vollständigen Drehung an einem aus dem Gehäuse herausführenden Entspannungskanal, bzw. einer Entspannungsöffnung vorbeiführbar sind. - Im Rahmen der Erfindung ist es möglich, zum Dosieren des Feststoffes den kegelstumpfförmigen, gleichsinnig drehbaren Körper mittels eines regelbaren Antriebes entweder eine kontinuierliche Bewegung oder eine schrittweise Bewegung ausführen zu lassen.

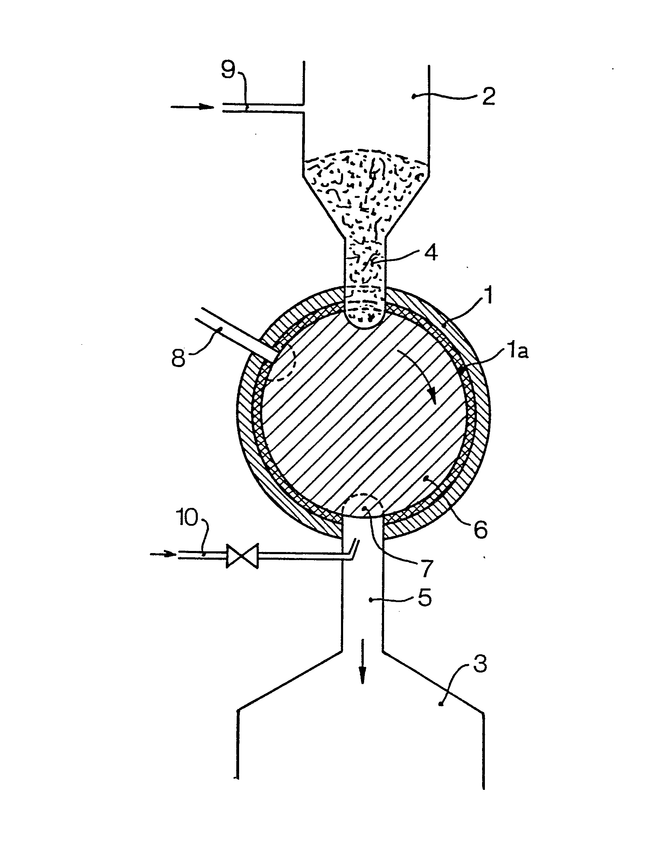

Anhand der Zeichnung, die stark vereinfacht einen Querschnitt durch das mit mehreren Anschlüssen versehene Gehäuse, den drehbaren Körper und die Dichtung wiedergibt, ist die Dosiervorrichtung nachfolgend näher beschrieben.

Das geschlossene Gehäuse 1 der Vorrichtung verbindet den drucklos gehaltenen oberen Vorratsbehälter 2 mittels des Zuführungskanals 4 für den zu dosierenden Stoff und den unteren Ausschleuskanal 5 zum Druckraum 3 hin. Das Gehäuse 1 ist entweder konisch ausgebildet oder im Innern konisch gebohrt und nimmt einen mit entsprechender Steigung konisch ausgeführten drehbaren Körper 6 ähnlich wie ein konisches Hahnküken in sich auf. Die Steigung des drehbaren Körpers 6 kann 2 bis 10 % betragen; bei einer erprobten Ausführungsform war sie mit 4 % bemessen. Zur Abdichtung des Gehäuses 1 gegenüber dem darin drehbaren Körper 6 sowie zur Verminderung der Reibung an den Mantelflächen ist eine Auskleidung des Gehäuses mit einem nichtmetallischen Werkstoff (1a) vorgesehen, der sich gegenüber dem zu dosierenden Stoff inert verhält. Zur druckdichten Anpressung der Mantelflächen ist der Körper 6 gegenüber dem Gehäuse 1 in Achsrichtung nachspannbar.

Zur Bemessung des aus dem Vorratsbehälter 2 in den Druckraum 3 bei jeder vollständigen Drehung des Körpers 6 zu überführenden Feststoffs sind in die Mantelfläche des Körpers 6 Vertiefungen 7 eingearbeitet, deren flächenhafte Ausdehnung etwa dem Querschnitt des als Rohrstutzen ausgeführten Zuführungskanals 4 und des gegenüberliegenden Ausschleuskanals 5 entspricht, wobei das vorbestimmte Volumen jeder auch als "Grübchen" anzusprechenden Vertiefung 7 durch das vorbestimmte Tiefenmaß erhalten wird. Zweckmäßig sind die Vertiefungen 7 in ihren Konturen gerundet, insbesondere ellypsoidal ausgeführt, um auf solche Weise das Sichfestsetzen von Feststoffteilchen in scharfen Ecken auszuschließen. Die mengenmäßige Bemessung des zu dosierenden Feststoffs ist bei vorgegebenem Volumen eines Grübchens ferner abhängig von der Anzahl der Vertiefungen 7 in der Mantelfläche des Körpers 6. Weist der drehbare Körper 6 mehrere Vertiefungen 7 von vorbestimmtem Volumen auf, so

müssen diese auf der gleichen Umfangslinie liegen, ebenso wie der Zuführungskanal 4 und der Ausschleuskanal 5 auf diese Umfangslinie ausgerichtet sein müssen. - Zum quasikontinuierlichen regelbaren Einführen von Feststoffmengen in einen Druckraum ist der drehbare Körper 6 an einer Stirnseite mit einer druckfest verpackten Antriebswelle versehen, an die ein in der Zeichnung nicht dargestellter motorischer Antrieb gekuppelt ist. Die Regelung erfolgt dann durch Ändern der Drehzahl dieses Antriebes. Die Dosierung von vorbestimmten Feststoffmengen durch Überführen aus dem Vorratsbehälter 2 in den Druckraum 3 kann sowohl durch eine kontinuierliche Bewegung des drehbaren Körpers 6 erfolgen, als auch durch eine mit Maßgabe der gegenseitigen Winkellagen von Zuführungskanal 4, Ausschleuskanal 5 und gegebenenfalls einem Entspannungskanal 8, - durch schrittweises Drehen mit zwischengeschalteten kurzzeitigen Ruhelagen in den Füll- und Entleerungspositionen der Vertiefungen 7.

Für einen Einsatz der Dosiervorrichtung zum geregelten Einbringen eines pulverförmigen Katalysators in einen Druckreaktor, z.B. in einen solchen für die Gasphasenpolymerisation von Olefinen, sind gegebenenfalls weitere bauliche Mittel bzw. verfahrenstechnische Maßnahmen erforderlich. Der Vorratsbehälter 2 wird dann geschlossen ausgeführt und der Katalysator zusammen mit einem Inertgas über die Leitung 9 eingebracht. Der Aufbau eines Druckes im Vorratsbehälter 2 ist jedoch zu vermeiden, da nur geringe Mengen von Inertgasen in den Reaktor gelangen dürfen. Andererseits darf der Katalysatorvorrat auch nicht mit dem zu polymerisierenden Äthylen in Berührung kommen. Die Vertiefungen 7 im drehbaren Körper 6 sind in diesem Fall mit verhältnismäßig kleinem Volumen zu bemessen, da der Katalysator in möglichst kleinen Portionen in den unter einem Druck von etwa 35 bar gehaltenen Reaktor eingetragen werden soll. Sofern gemäß der schematischen Zeichnung der Drehkörper 6 im Uhrzeigersinn bewegt wird, ist eine zwischen der Ausschleusposition und der Füllposition des Katalysators angeordnete Entspannungsöffnung bzw. ein Entspannungskanal 8 zwingend erforderlich, da andernfalls Äthylen aus dem Reaktor in geringen Mengen bis in den Katalysator-Vorratsraum geschleppt wird.—Falls erforderlich, kann jede Vertiefung 7 durch die Entspannungsöffnung 8 hindurch mit einem Spülgas ausgespült werden. In den Ausschleuskanal 5 ist ferner von der Seite her eine Spülleitung 10 eingefügt, deren inneres freies Ende gegen jede Vertiefung 7 gerichtet ist, die kontinuierlich oder schrittweise am Ausschleuskanal vorbeigeführt wird. Der gerichtete Strahl des eingesetzten Spülmittels, z.B. gasförmiges Äthylen, bewirkt dann sowohl die vollständige Entleerung jeder Vertiefung 7 als auch eine kontinuierliche Spülung des Ausschleuskanals 5 mit dem zu polymerisierenden Einsatzstoff.

Patentansprüche

1. Dosiervorrichtung zum regelbaren Einbringen von rieselbis pulverförmigen Feststoffen, insbesondere Katalysatoren, in Druckräume, z.B. in Druckreaktoren, mit einem in einem Gehäuse drehbaren Körper, der innerhalb seiner begrenzenden Kontur ein oder mehrere bemessene Kammern bzw. Kavaturen zur zeitweiligen Aufnahme von Teilmengen des zu dosierenden Stoffes aufweist, dadurch gekennzeichnet, daß der in einem druckdichten Gehäuse (1) drehbare Körper (6) ein Kegelstumpf mit einer Steigung von 1 bis 10 % ist, in dessen Mantelfläche ein oder mehrere, sphärisch gerundete, auf gleicher Umfangslinie liegende Vertiefungen (7) eingearbeitet sind, die bei jeder vollständigen Drehung nacheinander am Zuführungskanal (4) des Gehäuses (1) für den zu dosierenden Stoff, - am Ausschleuskanal (5) in den Druckraum bzw. Reaktor (3) und vor Beendigung der vollständigen Drehung an einem aus dem Gehäuse herausführenden Entspannungskanal (8) bzw. einer Entspannungsöffnung vorbeiführbar sind.

2. Dosiervorrichtung nach Anspruch 1, dadurch gekennzeichnet, daß der kegelstumpfförmige, drehbare Körper (6) zum Dosieren des Feststoffs mittels eines regelbaren Antriebs eine kontinuierliche Bewegung ausführt.

3. Dosiervorrichtung nach Anspruch 1, dadurch gekennzeichnet, daß der kegelstumpfförmige, drehbare Körper (6) zum Dosieren des Feststoffs mittels eines regelbaren Antriebs eine mit Maßgabe der Winkellagen von Zuführungskanal (4), Ausschleuskanal (5) und Entspannungskanal (8) schrittweise fortschreitende Bewegung ausführt.

4. Dosiervorrichtung nach Anspruch 1, _dadurch gekennzeichnet_, daß das entsprechend der Steigung des kegelstumpfförmigen Körpers (6) konisch gebohrte Gehäuse (1) mit einer Auskleidung (1a) aus einem inerten, nichtmetallischen Stoff versehen ist, gegen welche der drehbare Körper zur druckfesten Abdichtung in Achsrichtung nachspannbar ist.

5. Dosiervorrichtung nach Anspruch 1 bis 4, _dadurch gekennzeichnet_, daß in den zum Druckraum (3) hinführenden Ausschleuskanal (5) des mittels der Vertiefungen (7) im drehbaren Körper (6) zu dosierenden Feststoffs eine rohrförmige Spülleitung (10) einmündet, deren inneres, abgebogenes freies Ende gegen die sich in der Ausschleuslage befindenden Vertiefungen (7) gerichtet ist.

Zeichn.

**0025137**

Nummer der Anmeldung

EP 80 10 4829

))) Europäisches Patentamt

## EUROPÄISCHER RECHERCHENBERICHT

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | |
| X | FR - A - 1 372 312 (PHILLIPS PE- TROLEUM) <br><br> * Seite 1, Spalte 1, Zeilen 1-6; Seite 1, Spalte 2, Zeile 32 - Seite 2, Spalte 2, Zeile 16; Seite 2, Spalte 2, Zeile 35 - Seite 4, Spalte 1, Zeile 27; Abbildungen 1,2 * <br><br> -- | 1,2,4 5 | | B 01 J 3/02// C 08 F 2/00 10/00 |
| X | US - A - 3 219 208 (B.M. HADLEY et al.) <br><br> * Spalte 1, Zeilen 9-14; Spalte 1, Zeile 37 - Spalte 4, Zeile 37; Spalte 4, Zeilen 59-72; Abbildungen 1-4 * <br><br> -- | 1,2 | | **RECHERCHIERTE SACHGEBIETE (Int. Cl.³)** <br><br> B 01 J 3/02 8/00 C 10 J 3/30 3/50 F 16 K 5/02 |
| X | US - A - 2 816 693 (F.G. GREAVES et al.) <br><br> * Spalte 1, Zeilen 15-21; Spal- te 1, Zeile 65 - Spalte 3, Zeile 40; Spalte 4, Zeilen 10-16; Abbildungen 1-4 * <br><br> -- | 1 | | |
| A | FR - A - 1 593 744 (NIRO ATOMIZER) | 1 | | |
| A | DE - A - 2 065 377 (THE BAUER BROS) | 1 | | **KATEGORIE DER GENANNTEN DOKUMENTE** |
| A | DE - A - 2 041 045 (THE BAUER BROS) | 1 | | X: von besonderer Bedeutung <br> A: technologischer Hintergrund <br> O: nichtschriftliche Offenbarung <br> P: Zwischenliteratur |
| A | DE - A - 2 037 724 (THE BAUER BROS) <br><br> ---- | 1 | | T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patent- familie, übereinstimmendes Dokument |

| Recherchenort | Abschlußdatum der Recherche | Prüfer |
|---|---|---|
| Den Haag | 05-12-1980 | SIEM |

EPA form 1503.1 06.78